(19) Europäisches Patentamt
European Patent Office
Office européen des brevets

(11) **EP 2 541 657 A1**

(12) **EUROPEAN PATENT APPLICATION**
published in accordance with Art. 153(4) EPC

(43) Date of publication:
**02.01.2013 Bulletin 2013/01**

(51) Int Cl.:
***H01M 4/587*** (2010.01)   ***C01B 31/02*** (2006.01)

(21) Application number: **11747404.9**

(22) Date of filing: **23.02.2011**

(86) International application number:
**PCT/JP2011/054020**

(87) International publication number:
**WO 2011/105444 (01.09.2011 Gazette 2011/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2010   JP 2010044622**
**25.02.2010   JP 2010040228**

(71) Applicant: **Hitachi Chemical Company, Ltd.**
**Tokyo 163-0449 (JP)**

(72) Inventors:
• **OKABE, Keiji**
  **Hitachi-shi**
  **Ibaraki 316-0036 (JP)**

• **ISHII, Yoshito**
  **Hitachi-shi**
  **Ibaraki 316-0036 (JP)**
• **IDA, Yuriko**
  **Hitachi-shi**
  **Ibaraki 316-0036 (JP)**

(74) Representative: **Albrecht, Thomas**
  **Kraus & Weisert**
  **Patent- und Rechtsanwälte**
  **Thomas-Wimmer-Ring 15**
  **80539 München (DE)**

(54) **NEGATIVE ELECTRODE MATERIAL FOR LITHIUM ION SECONDARY BATTERY, NEGATIVE ELECTRODE FOR LITHIUM ION SECONDARY BATTERY WHICH COMPRISES THE NEGATIVE ELECTRODE MATERIAL, AND LITHIUM ION SECONDARY BATTERY**

(57) Disclosed are: a negative electrode material for a lithium ion secondary battery, which enables the production of one having a smaller irreversible capacity. That is a negative electrode material for a lithium ion secondary battery having a carbon layer formed on a surface of a carbon material as a core, wherein (A) a carbon (002) plane has a plane distance of 3.40 to 3.70 Å (by an XRD measurement), (B) a content ratio of the carbon layer to the carbon material is 0.005 to 0.1, (C) a specific surface area is 0.5 to 10.0 $m^2$/g (by a nitrogen adsorption measurement at 77 K), and (D) a specific surface area Y (by carbon dioxide adsorption at 273 K) and a content ratio X of the carbon layer to the carbon material meet the requirement represented by a formula (I): $0 < Y < AX + 2.5$ [A = 100].

**EP 2 541 657 A1**

## Description

Technical Field

The present invention relates to a negative electrode material for a lithium ion secondary battery, a negative electrode for a lithium ion secondary battery using the negative electrode material, and a lithium ion secondary battery. The invention relates more specifically to a lithium ion secondary battery suitably used in electric vehicles requiring a secondary battery, power tools, and so on having high input/output properties, a negative electrode material for a lithium ion secondary battery, and a negative electrode for a lithium ion secondary battery using the negative electrode material.

Background Art

In recent years, a lithium ion secondary battery has been expected to be used as a power source for high input/output such as a power source for electric vehicles and hybrid electric vehicles because the lithium ion secondary battery is lighter than other secondary batteries including a nickel-cadmium battery, a nickel-hydrogen battery, and a lead storage battery and has high input/output properties. When the lithium ion secondary battery is used as a power source for hybrid electric vehicles, the lithium ion secondary battery is required to have an excellent balance in the input/output properties and an excellent service life properties such as cycling characteristics and conservation properties.

In general, a negative electrode active material used in the lithium ion secondary battery is classified broadly into graphite-based and amorphous-based negative electrode active materials.
Graphite has a structure in which hexagonal net planes of carbon atoms are regularly stacked, and an intercalation/deintercalation redaction of lithium ions is progressed at the end of the stacked net planes, and charge and discharge are performed.
However, since the intercalation/deintercalation reaction progresses only at the end, an input/output performance is low. Further, there is a problem that reactivity with an electrolyte is high due to high crystallinity and a few defects of a surface, and the service life properties of the lithium ion secondary battery are deteriorated.

Meanwhile, in amorphous carbon, although hexagonal net planes are irregularly stacked, the amorphous carbon does not have a network structure, and therefore, the intercalation/deintercalation reaction of lithium progresses over the entire surface of particles, so that a lithium ion secondary battery with excellent input/output properties is easily obtained (for example, see Patent Literatures 1 and 2).

In general, the amorphous carbon is roughly classified into hard carbon and soft carbon. Even if the hard carbon is heat treated at a high temperature of not less than 2500°C, crystal hardly grows. Meanwhile, the soft carbon is easily changed into a graphite structure with high crystallinity by high temperature treatment.

In the amorphous carbon, the crystallinity of the particle surface is low in contrast with graphite, and a reaction with an electrolyte can be suppressed. Therefore, a lithium ion secondary battery using the amorphous carbon as a negative electrode material has such a characteristic that the service life properties are more excellent than in the case using graphite. On the other hand, the irreversible capacity is large due to the structural irregularity, and, in addition, the specific gravity is small. Therefore, it is difficult to increase the electrode density, and there is problem that the energy density is low.
Thus, there have been required a lithium ion secondary battery, which has a small irreversible capacity, a large energy density, and excellent input/output properties and service life properties, and a negative electrode material enabling the production of the lithium ion secondary battery.

Citation List

Patent Literature

Patent Literature 1: Japanese Patent Application Laid-Open No. 4-370662
Patent Literature 2: Japanese Patent Application Laid-Open No. 5-307956

Summary of Invention

Technical Problem

This invention provides a lithium ion secondary battery having a smaller irreversible capacity compared with those of conventional lithium ion secondary batteries and excellent input/output properties and service life properties, a negative electrode material for a lithium ion secondary battery enabling the production of the lithium ion secondary battery, and a negative electrode for a lithium ion secondary battery produced using the negative electrode material.

Solution to Problem

As a result of intensive studies made by the present inventors, it has been found that in a negative electrode material for a lithium ion secondary battery having a low crystalline carbon layer formed on a surface of a carbon material that serves as a core, a low crystalline carbon layer ratio and the specific surface area are controlled within a specific range, so that the problems can be solved. More specifically, the present invention includes the following items (1) to (7).

(1) A negative electrode material for a lithium ion secondary battery having a carbon layer formed on a surface of a carbon material that serves as a core,
wherein (A) a carbon (002) plane has a plane distance of 3.40 to 3.70 Å as determined by an XRD measurement, (B) a content ratio (by mass) of the carbon layer to the carbon material is 0.005 to 0.1, (C) a specific surface area is 0.5 to 10.0 $m^2$/g as determined by a nitrogen adsorption measurement at 77 K, and (D) a specific surface area Y as determined by carbon dioxide adsorption at 273 K and a content ratio (by mass) X of the carbon layer to the carbon material meet the requirement represented by a formula (I): $0 < Y < AX + 2.5$ [wherein A = 100].

(2) A negative electrode material for a lithium ion secondary battery having a carbon layer formed on a surface of a carbon material that serves as a core,
wherein (A) a carbon (002) plane has a plane distance of 3.40 to 3.70 Å as determined by an XRD measurement, (B) a weight loss rate at 100 to 600°C in TG analysis in the passage of dry airflow is 3.5 to 90%, (C) a specific surface area is 0.5 to 10.0 $m^2$/g as determined by a nitrogen adsorption measurement at 77 K, and (D) a weight loss rate Z at 1.00 to 600°C in TG analysis in the passage of dry airflow and the ratio (by mass) X of the carbon layer to the carbon material meet the requirement represented by a formula (II): $3.5 \leq Z < BX + 10$ [wherein B = 900].

(3) The negative electrode material for a lithium ion secondary battery according to the item (1) or (2), wherein in a profile obtained by laser raman spectrometry with an excitation wavelength of 532 nm, when the intensity of the peak appearing near 1360 $cm^{-1}$ is Id, the intensity of the peak appearing near 1580 $cm^{-1}$ is Ig, and the intensity ratio Id/Ig between both the peaks is an R value, the R value is 0.5 to 1.5.

(4) The negative electrode material for a lithium ion secondary battery according to any one of the items (1) to (3), wherein an average particle diameter (50% D) is 5 to 50 $\mu$m.

(5) The negative electrode material for a lithium ion secondary battery according to any one of the items (1) to (4), wherein a true density is 1.80 to 2.20 $g/cm^3$.

(6) A negative electrode for a lithium ion secondary battery being produced using the negative electrode material for a lithium ion secondary battery according to any one of the items (1) to (5).

(7) A lithium ion secondary battery being produced using the negative electrode for a lithium ion secondary battery according to the item (6).

The disclosure of the present application is related to the subject matters described in Japanese Patent Application No. 2010-40228 filed on February 25, 2010 and Japanese Patent Application No. 2010-44622 filed on March 1, 2010, and the contents disclosed therein are incorporated herein by reference.

Advantageous Effects of Invention

The present invention can provide a lithium ion secondary battery having a smaller irreversible capacity compared with those of conventional lithium ion secondary batteries and excellent input/output properties and service life properties, a negative electrode material for a lithium ion secondary battery enabling the production or lithium ion secondary battery, and a negative electrode for a lithium ion secondary battery produced using the negative electrode material.

Description of Embodiments

Hereinafter, the present invention will be described in detail. First, a negative electrode material for a lithium ion secondary battery (hereinafter also referred to as a "negative electrode material") will be described.

<Negative electrode material for lithium ion secondary battery>

A negative electrode material for a lithium ion secondary battery of the present invention according to a first aspect is a negative electrode material for a lithium ion secondary battery having a carbon layer formed on a surface of a carbon material that serves as a core and has characteristics that:

(A) the carbon (002) plane has a plane distance of 3.40 to 3.70 Å as determined by an XRD measurement;
(B) the content ratio (by mass) of the carbon layer to the carbon material is 0.005 to 0.1;
(C) the specific surface area is 0.5 to 10.0 $m^2/g$ as determined by a nitrogen adsorption measurement at 77 K; and
(D) the specific surface area Y as determined by carbon dioxide adsorption at 273 K and the content ratio (by mass) X of the carbon layer to the carbon material meet the requirement represented by a formula (I):

$$0 < Y < AX + 2.5 \; [\text{wherein } A = 100].$$

In the negative electrode material of the present invention, (A) a plane distance $d002$ of the carbon (002) plane as determined by the XRD measurement may be 3.40 Å to 3.70 Å, preferably 3.40 Å to 3.60 Å, and particularly preferably 3.40 Å to 3.50 Å. When the plane distance $d002$ is not less than 3.40 Å, excellent input/output properties and service life properties are obtained. Meanwhile, the plane distance $d002$ is not more than 3.70 Å, the irreversible capacity is reduced. The plane distance $d002$ of the carbon (002) plane can be calculated by using Bragg's equation from the diffraction peak, corresponding to the carbon (002) plane and appearing at near a diffraction angle $2\theta = 24$ to 26° on a diffraction profile obtained by irradiating an X-ray (CuK$\alpha$ ray) to a sample and measuring a diffraction line with a goniometer.

A value of the plane distance $d002$ of the carbon (002) plane tends to decrease by, for example, increasing a heat treatment temperature to the negative material, and the plane distance $d002$ can be set within the above range by using this property.

As one of the features of the negative electrode material of the present invention, the negative electrode material has a low crystalline carbon layer formed on a surface of a carbon material serving as a core. (B) The content ratio (by mass) of the carbon layer to the carbon material is 0.005 to 0.1, preferably 0.005 to 0.09, and particularly preferably 0.005 to 0.08. When the content ratio (by mass) of the carbon layer to the carbon material is not less than 0.005, excellent input/output properties, initial efficiency, and service life properties are obtained. When the content ratio is not more than 0.1, the excellent input/output properties are obtained.

Although the carbon material serving as a core is not limited particularly, there are exemplified carbon materials prepared by firing a thermoplastic resin, naphthalene, anthracene, phenanthroline, coal tar, tar pitch, and so on. The carbon layer can be formed by, for example, reforming the surfaces of those carbon materials. Although the reforming method is not limited particularly, for example, a resin leaving a carbonaceous material by heat treatment is coated on the surface of the carbon material, and heat treatment is performed, whereby the surface can be reformed.

In the negative electrode material of the present invention, (C) the specific surface area is 0.5 $m^2/g$ to 10 $m^2/g$ as determined by the nitrogen adsorption measurement at 77 K, preferably 0.5 $m^2/g$ to 9.0 $m^2/g$, and particularly preferably 0.5 $m^2/g$ to 8.0 $m^2/g$. When the specific surface area is not less than 0.5 $m^2/g$, excellent input/output properties are obtained. When the specific surface area is not more than 10 $m^2/g$, excellent service life properties are obtained. The specific surface area in nitrogen adsorption can be obtained from an absorption isotherm obtained by the nitrogen adsorption measurement at 77 K.

A value of the specific surface area obtained by the nitrogen adsorption measurement at 77 K tends to decrease by, for example, increasing an average particle diameter of the negative electrode material, increasing the heat treatment temperature to the negative electrode material, and reforming the surface of the negative electrode material, and the specific surface area obtained by the nitrogen adsorption measurement at 77 K can be set within the above range by using this property.

In the negative electrode material of the present invention, in a relationship between (D) the specific surface area Y as determined by the carbon dioxide adsorption at 273 K and the content ratio (by mass) X of the carbon layer to the carbon material, the formula (I) is satisfied. However, the value off in the formula (I) is 100, preferably 90, and particularly preferably 80.
The negative electrode material meeting the formula (I) has excellent service life properties and is a negative electrode material with high input/output and high efficiency.
In the negative electrode material for a lithium ion secondary battery having the above characteristics, even through the content ratio of the carbon layer is relatively high, the specific surface area is low, so that a small irreversible capacity, long service life properties, and high input/output properties are simultaneously realized.

When the formula (I) is satisfied, the specific surface area obtained by the carbon dioxide adsorption measurement at 273 K is not limited; however, in terms of the service life properties, the initial efficiency, and the input/output properties, the specific surface area is preferably 0.3 $m^2$/g to 12.5 $m^2$/g, particularly preferably 0.3 $m^2$/g to 11.5 $m^2$/g, and especially preferably 0.3 $m^2$/g to 10.5 $m^2$/g.

The specific surface area obtained by the carbon dioxide adsorption measurement at 273 K can be obtained by using BET method from an adsorption isotherm obtained by the carbon dioxide adsorption measurement at 273 K.

A value of the specific surface area obtained by the carbon dioxide adsorption measurement at 273 K tends to decrease by, for example, increasing an average particle diameter of the negative electrode material, increasing the heat treatment temperature to the negative electrode material, and reforming the surface of the negative electrode material, and the specific surface area obtained by the carbon dioxide adsorption measurement at 273 K can be set within the above range by using this property.

A negative electrode material for a lithium ion secondary battery of the present invention according to a second aspect is a negative electrode material for a lithium ion secondary battery having a carbon layer formed on a surface of a carbon material that serves as a core and has characteristics that:

(A) the carbon (002) plane has a plane distance of 3.40 to 3.70 Å as determined by an XRD measurement;
(B) the weight loss rate at 600°C in TG analysis in the passage of dry airflow is 3.5 to 90%;
(C) the specific surface area is 0.5 to not more than 10.0 $m^2$/g as determined by a nitrogen adsorption measurement at 77 K; and
(D) the weight loss rate Z at 100 to 600°C in TG analysis in the passage of dry airflow and the content ratio (by mass) X of the carbon layer to the carbon material meet the requirement represented by a formula (II):

$$3.5 \leq Z < BX + 10 \text{ [wherein } B = 900].$$

Since the requirements (A) and (C) in the second aspect are the same as those in the first aspect, descriptions of them are omitted, and the requirements (B) and (D) as the differences from the first aspect will be described.

In the second aspect of the present invention, (B) the weight loss rate in TG analysis in the passage of dry air is 3.5 to 90%, preferably 3.5 to 80%, and particularly preferably 3.5 to 75%. When the weight loss rate is not less than 3.5%, excellent service life properties are obtained. When the weight loss rate is not more than 90%, excellent input/output properties are obtained.

The weight loss rate can be measured by a TG analysis apparatus (for example, SII technology TG/DTA 6200). For example, measurement is performed under circulation of 300 ml/min of dry air using alumina as a reference when a temperature increase rate is 5°C/min, and the weight loss rate is measured at 100°C to 600°C, whereby the weight loss rate can be obtained.

In the second aspect of the present invention, in a relationship between (D) the weight loss rate Z at 100 to 600°C in the TG analysis in the passage of dry airflow and the content ratio (by mass) X of the carbon layer to the carbon material, the formula (II) is satisfied. However, the value of B in the formula (II) is 900, preferably 800, particularly preferably 750, and especially preferably 700.

The negative electrode material satisfying the formula (II) has excellent service life properties and is a negative electrode material with high input/output and high efficiency.

In the negative electrode material, of the present invention, in all aspects, in a profile obtained by laser raman spectrometry with an excitation wavelength of 532 nm, when the intensity of the peak appearing near 1360 $cm^{-1}$ is Id, the intensity of the peak appearing near 1580 $cm^{-1}$ is Ig, and the intensity ratio Id/Ig between both the peaks is an R value, the R value is preferably 0.5 to 1.5. When the R value is not less than 0.5, excellent service life properties and input/output properties tend to be excellent. When the R value is not more than 1.5, excellent service life properties and initial efficiency tend to be excellent. In view of this, the R value is particularly preferably 0.5 to 1.3 and especially preferably 0.5 to 1.2. In the laser raman spectrometry, NRS-1000 manufactured by JASCO Corporation is used, and the excitation wavelength, laser output, and entrance slit are set respectively to 532 nm, 3.9 mW, and 150 $\mu$m, whereby measurement can be performed.

The R value tends to be increased by enhancing the crystallinity of a core material, and the R value can be set within the above range by using this property.

The average particle diameter (50% D) of the negative electrode material of the present invention is preferably 5 to 50 $\mu$m in all aspects. When the average particle diameter is not less than 5 $\mu$m, the specific surface area can be fallen within an appropriate range, and an initial charge/discharge efficiency of a lithium ion secondary battery is excellent. At the same time, the input/output properties tend to be excellent for goodness of contact between particles. Meanwhile, when the average particle diameter is not more than 30 $\mu$m, irregularities are less likely to be formed on an electrode surface, and short circuit of a battery can be suppressed. In addition, since the diffusion distance of Li from a particle surface to inside thereof is relatively short, the input/output properties of the lithium ion secondary battery tend to be enhanced. In view of this, the average particle diameter is preferably 5 to 40 $\mu$m and particularly preferably 5 to 30 $\mu$m. For example, a sample is dispersed in purified water containing surfactant, and particle size distribution can be measured by a laser diffraction particle size distribution measurement apparatus (for example, SALD-3000J manufactured by Shimadzu Corporation). The average particle diameter is calculated as 50% D.

The true density of the negative electrode material of the present invention is preferably 1.80 to 2.20 g/cm$^3$ in all aspects. When the true density is not less than 1.80 g/cm$^3$, the electrode density can be increased. Therefore, the charge/discharge capacity per volume of the lithium ion secondary battery is increased, and the initial charge/discharge efficiency tends to be enhanced. Meanwhile, when the true density is not more than 2.20 g/cm$^3$, reactivity with an electrolyte is suppressed, and therefore, the service life properties of the lithium ion secondary battery tend to be enhanced. In view of this, the true density is particularly preferably 1.90 to 2.20 g/cm$^3$ and especially preferably 1.80 to 2.20 g/cm$^3$. The true density can be obtained by a pycnometer method using butanol. A value of the true density tends to be increased by, for example, increasing the heat treatment temperature to the negative electrode material, and the true density can be set within the above range by using this property.

Although a method for preparing the negative electrode material for a lithium ion secondary battery of the present invention is not limited particularly, as an example, the carbon layer is formed by reforming the surface of the carbon material serving as a core, and the negative electrode material of the present invention can be obtained. Although a method for obtaining the carbon material serving as a core is not limited particularly, thermoplastic resin, naphthalene, anthracene, phenanthroline, coal tar, tar pitch, and so on are calcined under an inert atmosphere at not less than 800°C and then ground by a known method such as jet mill, vibration mill, pin mill, hammer mill, and so on, and the particle size is adjusted to 5 to 30 $\mu$m, whereby the negative electrode material can be prepared. The above components may be previously heat treated before the calcination. When the heat treatment is applied, the above components are previously heat treated by a device such as autoclave and are coarsely ground by a known method. Thereafter, as in the above description, the components are calcined under an inert atmosphere at a temperature of not less than 800°C and then ground to adjust the particle size, whereby the negative electrode material can be obtained.

In the negative electrode material for a lithium ion secondary battery of the present invention, for example, an organic compound (carbon precursor) leaving a carbonaceous material by heat treatment is adhered onto the surface of the carbon material serving as a core to be then fired and carbonized in an inert atmosphere at a temperature of 750°C to 1000°C, and, thus, to reform the surface of the carbon material, whereby the carbon layer can be formed. Although the method of adhering the organic compound onto the surface of the carbon material serving as a core is not limited particularly, there are, for example, a wet method of dispersing/mixing carbon particles (powder), serving as a core, in a mixed solution in which an organic compound is dissolved or dispersed in a solvent and then removing the solvent, a dry method of mixing the carbon particles with the organic compound in a solid-to-solid manner and applying a mechanical energy to the mixture to adhere the organic compound, and a gas-phase method such as a CVD method. However, in terms of control of the specific surface area, it is preferable to adhere the organic compound by the dry method.

Although the organic compound (carbon precursor) leaving a carbonaceous material by heat treatment is not limited particularly, there can be used, for example, ethylene heavy end pitch, crude oil pitch, coal tar pitch, asphalt decomposition pitch, pitch obtained by pyrolyzing polyvinyl chloride or the like, and synthetic pitch prepared by polymerizing naphthalene or the like under the presence of super-strong acid. Further, as the thermoplastic polymer compound, thermoplastic synthetic resins such as polyvinyl chloride, polyvinyl alcohol, polyvinyl acetate, polyvinyl butyral or the like can be used as well. Furthermore, natural products such as starch and cellulose can be used as well.

<Negative electrode for lithium ion secondary battery>

The negative electrode for a lithium ion secondary battery of the present invention is produced using the above negative electrode material for a lithium ion secondary battery of the present invention. For example, the negative electrode material for a lithium ion secondary battery of the present invention and an organic binding agent are kneaded with a solvent by a dispersing device such as a stirring mill, ball mill, super sand mill, and pressure kneader, and a negative electrode material slurry is prepared to be coated onto a collector, and, thus, to form a negative electrode layer. Alternatively, a paste-like negative electrode material slurry is formed into a shape such as a sheet shape and a pellet shape and integrated with the collector, whereby the negative electrode can be obtained.

Although the organic binding agent is not limited particularly, there are, for example, ethylenic unsaturated carboxylic ester such as styrene-butadiene copolymer, methyl (meth)acrylate, ethyl (meth)acrylate, butyl (meth)acrylate, (meth)acrylonitrile, and hydroxyethyl (meth)acrylate, ethylenic unsaturated carboxylic acid such as acrylic acid, methacrylic acid, itaconic acid, fumaric acid, and maleic acid, and a high polymer compound having a high ion conductive property, such as polyvinylidene-fluoride, polyethylene oxide, polyepichlorohydrin, polyphosphazene, and polyacrylonitrile. It is preferable that the organic binding agent is contained in an amount of 1 to 20 parts by mass based on 100 parts by mass of the total of the negative electrode material for a lithium ion secondary battery or the present invention and the organic binding agent.

The negative electrode material slurry may contain a thickener for adjusting viscosity. As the thickener, there can be used, for example, carboxymethyl cellulose, methylcellulose, hydroxymethyl cellulose, ethylcellulose, polyvinyl alcohol, polyacrylic acid (polyacrylate), oxidized starch, phosphorylated starch, casein, and so on.

Further, the negative electrode material slurry may be mixed with a conductive auxiliary material. As the conductive auxiliary material, there are, for example, carbon black, graphite, acetylene black, and oxide and nitride exhibiting conductivity. The amount of used conductive auxiliary material may be approximately I to 15% by weight to the negative electrode material of the present invention.

The material and shape of the collector are not limited particularly, and a belt-like collector in which aluminum, copper, nickel, titanium, stainless steel, or the like is formed into a foil shape, a perforated foil shape, a mesh shape, or the like may be used. Further, a porous material such as porous metal (foam metal) and carbon paper may be used.

Although the method of coating the negative electrode material onto the collector is not limited particularly, there are exemplified well-known methods such as a metal mask printing method, electrostatic coating method, dip coating method, spray coating method, roll coating method, doctor blade method, gravure coating method, and screen printing method. After coating, rolling process using a flat plate press, a calendar roller, or the like is performed according to need. The negative electrode material slurry formed into a sheet shape, a pellet shape, or the like and the collector can be integrated by well-known methods using a roll, a press, or combination thereof, or the like.

<Lithium ion secondary battery>

A lithium ion secondary battery of the present invention is produced using the above negative electrode for a lithium ion secondary battery of the present invention. For example, the negative electrode for a lithium ion secondary battery of the present invention and a positive electrode are arranged to face each other through a separator, and an electrolyte is injected, whereby the lithium ion secondary battery can be obtained.

As with the negative electrode, the positive electrode can be obtained by forming a positive electrode layer on a collector surface. In this case, there can be used a belt-like collector in which metal such as aluminum, titanium, and stainless steel or an alloy is formed into a foil shape, a perforated foil shape, a mesh shape, or the like.

A positive electrode material used in the positive electrode layer is not limited particularly, and a metal compound capable of doping lithium ions or intercalation of lithium ions, a metal oxide, a mental sulfide, and a conductive polymer material may be used, for example, and the positive electrode material is not limited particularly. However, lithium cobaltate ($LiCoO_2$), lithium nickelate ($LiNiO_2$), lithium manganate ($LiMnO_2$), and a multiple oxide thereof ($LiCo_xNi_yMn_zO_2$, x + y + z = 1), lithium manganese spinel ($LiMn_2O_4$), a lithium vanadium compound, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, olivine-type $LiMPO_4$ (M: Co, Ni, Mn, Fe), conductive polymers such as polyacetylene, polyaniline, polypyrrole, polythiophene, and polyacene, and porous carbon may be used singly, or mixtures thereof may be used.

As examples of the separator, nonwoven fabrics, cloths, and microporous films composed mainly of polyolefins such as polyethylene and polypropylene may be used, or combinations thereof may be used. The separator is not required to be used when the positive electrode and the negative electrode of the lithium ion secondary battery to be produced are not in direct contact with each other.

As the electrolyte, there can be used, for example, a so-called organic electrolyte solution prepared by dissolving lithium salt such as $LiClO_4$, $LiPF_6$, $LiAsF_6$, $LiBF_4$, and $LiSO_3CF_3$ in a non-aqueous solvent such as ethylene carbonate, propylene carbonate, butylene carbonate, vinylene carbonate, cyclopentanone, sulfolane, 3-methylsulfolane, 2,4-dimethylsulfolane, 3-methyl-1,3-oxazolidine-2-on, $\gamma$-butyrolacton, dimethyl carbonate, diethyl carbonate, ethyl methyl carbonate, methyl propyl carbonate, butyl methyl carbonate, ethyl propyl carbonate, butyl ethyl carbonate, dipropyl carbonate, 1,2-dimethoxyethane, tetrahydrofuran, 2-methyltetrahydrofuran, 1,3-dioxolan, methyl acetate and ethyl acetate, or mixtures of two or more components.

Although the structure of the lithium ion secondary battery of the present invention is not limited particularly, usually, the positive and negative electrodes and the separator provided according to need are wrapped in a flat spiral shape to provide a wrapped type of electrode plate group. Alternatively, in general, those components are formed into a flat plate shape to be laminated, and, thus, to provided a laminated type of electrode plate group, or the electrode plate group is encapsulated in an exterior body.

Although the lithium ion secondary battery of the present invention is not limited particularly, the lithium ion secondary battery is used as a paper type battery, a button type battery, a coin type battery, a stacked battery, a cylindrical battery, a rectangular battery, and so on.

The lithium ion secondary battery of the present invention as described above has a smaller irreversible capacity compared with those of conventional lithium ion secondary batteries using a carbon material in a negative electrode and has excellent input/output properties and service life properties.

Examples

Hereinafter, the present invention will be described more specifically using Examples. However, the present invention is not limited to the following Examples.

(Examples I to 10)

Coal-based coal tar was heat treated at 400°C using an autoclave to obtain raw cokes. After grinding the raw coke, calcination was performed under an inert atmosphere at a temperature of 1200°C to obtain a coke mass. The coke mass is ground into powder with an average particle diameter of 15 $\mu$m, using an impact grinder with classifier, and thereafter, coarse powder was removed by a 300 mesh sieve and provided for Examples as carbon particles.

The prepared carbon particles and polyvinyl alcohol (polymerization degree: 1700 and completely saponified type) were mixed. More specifically, 107 g (Example 1), 428 g (Example 2), 1070 g (Example 3), 1712 g (Example 4), and 1926 g (Example 5) of polyvinyl alcohol were respectively mixed with 3000 g of the carbon particles. Further, the carbon particles and coal tar pitch were mixed. More specifically, 36 g (Example 6), 144g (Example 7), 360 g (Example 8), 576 g (Example 9), and 648 g (Example 10) of coal tar pitch was mixed with 3000 g of the carbon particles.

The above mixture was encapsulated in a device in which a cylindrical case was provided, a rotor blade was attached inside the case, and materials could be compounded by rubbing materials between a cylinder inner wall and the rotor blade. This device was operated at a load of 24 kW for 10 minutes, whereby a resin carbon powder complex was prepared.

Subsequently, temperature was increased to 900°C at a temperature increase rate of 20°C/hour under an inert atmosphere. The temperature was held for one hour to obtain carbon layer coating carbon particles. The obtained carbon layer coating carbon particles were crushed by a cutter mill to be passed through a normal sieve having 300 meshes, and, thus, to obtain a negative electrode material sample. The used polyvinyl alcohol was heat treated alone at 200°C for 5 hours, and then the temperature is increased to 900°C at the temperature increase rate of 20°C/hour under nitrogen circulation. When the temperature was held for one hour, the carbonization rate was 14%. When coal tar pitch was evaluated by a similar method, the carbonization rate was 60%.
From the above value and the carbon coating amount, coating carbon ratios (the content ratio (by mass) of the carbon layer to the carbon material) of the respective Examples were calculated and found to be 0.005 (Examples 1 and 6), 0.02 (Examples 2 and 7), 0.05 (Examples 3 and 8), 0.07 (Examples 4 and 9), and 0.09 (Examples 5 and 10), respectively. The physical properties and electrical characteristics of the above carbon particles and the negative electrode material samples in the respective Examples were measured by the following method. The measurement results are shown in table 1.

(Examples 11 to 14)

Coal-based coal tar was heat treated at 400°C using an autoclave to obtain raw cokes. After grinding the raw coke, calcination was performed under an inert atmosphere at a temperature of 1200°C to obtain a coke mass. The coke mass was ground into powders with average particle diameters of 3 $\mu$m (used in Example 11) and 6 $\mu$m (used in Example 12) using an air flow crusher with classifier and 40 $\mu$m (used in Example 13) and 60 $\mu$m (used in Example 14) using an impact grinder, and whereafter, coarse powder was removed by a 300 mesh sieve and provided for Examples as carbon particles.

The produced carbon particles and polyvinyl alcohol (polymerization degree: 1700 and completely saponified type) were mixed. More specifically, 3000 g of the carbon particles with average particle diameters of 3 $\mu$m (used in Example 11), 6 $\mu$m (used in Example 12), 40 $\mu$m (used in Example 13), and 60 $\mu$m (used in Example 14) were mixed with 1070 g of polyvinyl alcohol. Further, after that, treatment was performed as in the Examples 1 to 10, and the negative electrode material sample was obtained. The physical properties and electrical characteristics of the above carbon particles and the negative electrode material samples in the respective Examples were measured by the following method. The measurement results are shown in Table 1.

TG weight loss rate: By use of a SII technology TG/DTA6200, measurement was performed under circulation of 300 ml/min of dry air using alumina as a reference when the temperature increase rate is 5°C/min, and the weight loss rate was measured at 100°C to 600°C, whereby the TG weight loss rate was obtained.

Raman spectrum peak intensity ratio (R value): By use of NRS-1000 manufactured by JASCO Corporation, measurement was performed under the conditions of laser output: 10 mW, spectrometer: F single, incident slit width: 800 $\mu$m, times of integration: two times, and exposure time: 120 sec.

Average particle diameter: A solution prepared by dispersing graphite particles and a surfactant in purified water was introduced into a sample tank of a laser diffraction particle size distribution analyzer (SALD-3000J manufactured by Shimadzu Corporation). The solution was circulated with a pump while ultrasonic waves are applied, and the particle size distribution was measured by a laser diffraction method. The accumulated 50% particle diameter (50% D) of the obtained particle size distribution was the average particle diameter.

True specific gravity (true density): The true specific gravity was measured by a butanol substitution method (JIS R 7212) using a pycnometer.

Nitrogen specific surface area: Obtained graphite particles were vacuum-dried at 200°C for 3 hours, and then nitrogen adsorption at a liquid nitrogen temperature (77 K) was measured by a multipoint method using ASAP 2010 manufactured by Micromeritics, and the nitrogen specific surface area was calculated according to the BET method.

$CO_2$ specific surface area: The obtained graphite particles were vacuum-dried at 250°C for 3 hours, and then carbon dioxide adsorption at 273 K was measured by a multipoint method using AUTOSORB-1 manufactured by Quantachrome, and the $CO_2$ specific surface area was calculated according to the BET method.

<Measurement of initial charge/discharge capacity and efficiency>

Polyvinylidene-fluoride (PVDF) dissolved in N-methyl-2 pyrrolidone was added to 92% by weight of the negative electrode material sample in each Example so that a solid content was 8% by weight to be kneaded, and, thus, to prepare a paste-like negative electrode material slurry. The slurry was coated onto an electrolytic copper foil with a thickness of 40 $\mu$m by using a mask with a thickness of 200 $\mu$m so that the diameter of the slurry was 9.5 mm to be dried at 105°C, and, thus, to remove N-methyl-2 pyrrolidone, whereby a sample electrode (negative electrode) was produced.

Subsequently, the sample electrode, a separator, and a counter electrode (positive electrode) are stacked in this order, and then an electrolyte solution prepared by dissolving $LiPF_6$ in a concentration of 1.0 mole/liter in a mixed solvent containing ethylene carbonate (EC) and methyl ethyl carbonate (MEC) (at a 3 : 7 ratio by volume) was injected to prepare a coin battery. Metallic lithium was used as the counter electrode, and a polyethylene microporous film with a thickness of 20 $\mu$m was used as the separator.

The coin battery prepared as above was charged to 0 V (Vvs. Li/Li[+]) with a constant current of 0.2 mA and then charged with a constant voltage of 0 V until the current value reached 0.02 mA. Subsequently, after a quiescent period of 30 minutes, a single cycle test in which the coin battery was discharged down to 1.5 V (Vvs. Li/Li[+]) with a constant current of 0.2 mA was performed, and the discharge capacity and the initial discharge efficiency were measured. The initial charge/discharge efficiency was calculated as (discharge capacity)/(charge capacity) x 100. The results are shown in Table 1.

<Evaluation of service life properties>

A negative electrode material slurry was prepared by a similar method to that in the terms of the initial charge/discharge capacity and the efficiency measurement. The slurry was coated onto an electrolytic copper foil with a thickness of 40 $\mu$m by a comma coater whose clearance was adjusted so that the coating amount was 4.5 mg/cm[2]. The electrode thus obtained was punched into a disk shape with a diameter of 14 mm to prepare a measuring electrode.

The measuring electrode, a separator, and a counter electrode (positive electrode) were stacked in this order, and then an electrolyte solution prepared by dissolving $LiPF_6$ in a concentration of 1.0 mole/liter in a mixed solvent containing ethylene carbonate (EC) and methyl ethyl carbonate (MEC) (at a 3 : 7 ratio by volume) was injected to prepare a coin battery. Metallic lithium was used as the counter electrode, and a polyethylene microporous film with a thickness of 20 $\mu$m was used as the separator.

By use of the coin battery prepared as above, the service life properties were evaluated through the procedure from (1) to (5).

(1) The coin battery was charged to 0 V (Vvs. Li/Li[+]) with a constant current of 0.20 mA and then charged with a constant voltage of 0 V until the current value reached 0.020 mA

(2) After a quiescent period of 30 minutes, a single cycle test in which the coin battery was discharged down to 1.5 V (Vvs. Li/Li[+]) with a constant current of 0.24 mA was performed, and the discharge capacity was measured.

(3) The coin battery was charged to 0 V (Vvs. Li/Li[+]) with a constant current of 2.0 mA and then charged with a constant voltage of 0 V until the current value reached 0.20 mA

(4) After a quiescent period of 30 minutes, the coin battery was discharged down to 1.5 V (Vvs. Li/Li[+]) with a constant current of 2.0 mA.

(5) The charge/discharge cycle test (3) and (4) was performed for 50 cycles.

A discharge capacity maintenance ratio from the first cycle obtained when the above cycle was repeated 50 times (= discharge capacity in 50th cycle/discharge capacity in the first cycle x 100) was measured, and the service life properties were evaluated. The result showed that as the discharge capacity maintenance ratio becomes higher, the service life properties of a material become more excellent. The results are shown in Table 1.

<Evaluation of input properties>

A coin battery was prepared by a similar method to that in the service life properties, and the input properties were evaluated by the following procedure.

The coin battery was charged to 0 V (Vvs. Li/Li$^+$) with a constant current of 0.2 mA/cm$^2$, and after a quiescent period of 30 minutes, the coin battery was discharged down to 1.5 V (Vvs. Li/Li$^2$) with a constant current of 0.2 mA/cm$^2$. This charge/discharge cycle was repeated twice, and the charge/discharge capacity per electrode volume was measured at low current.

After a quiescent period of 30 minutes, the coin battery was charged to 0 V (Vvs. Li/Li$^+$) with a constant current of 8 mA/cm$^2$, and the charge capacity per electrode volume was measured at high current.

The charge/discharge capacity per electrode volume (mAh/cm$^3$) was calculated by multiplying a measured value of the charge/discharge capacity per weight of the negative electrode material (mAh/g) by an electrode density (g/cm$^3$). The input properties were evaluated based on a value obtained by divided the charge/discharge capacity per electrode volume at high current (8 mA/cm$^2$) by the charge/discharge capacity per electrode volume at low current (0.2 mA/cm$^2$). It can be determined that the larger this value, the more excellent the input/output properties. The results are shown in Table 1.

(Comparative Examples 1 and 2)

By use of carbon particles with average diameters of 6 $\mu$m (Comparative Example 1) and 15 $\mu$m (Comparative Example 2), which were not subjected to the surface reformation used in the Examples 1 and 12 (no carbon layer coating), a lithium ion secondary battery was produced by a similar method to that in the Examples, and similar evaluation was performed. The results are shown in Table 1.

(Comparative Example 3)

The carbon particles used in the Examples 1 to 10 and polyvinyl alcohol (polymerization degree: 1700 and completely saponified type) were mixed. More specifically, 2359 g of polyvinyl alcohol was mixed with 3000 g of the carbon particles. The obtained mixture was encapsulated in a device in which a cylindrical case was provided, a rotor blade was attached inside the case, and materials could be compounded by rubbing materials between a cylinder inner wall and the rotor blade. This device was operated at a load of 25 kW for 10 minutes, whereby a resin carbon powder complex was prepared.

Subsequently, temperature was increased to 900°C at a temperature increase rate of 20°C/hour under an inert atmosphere. The temperature was held for one hour to obtain carbon layer coating carbon particles. The obtained carbon layer coating carbon particles were crushed by a cutter mill to be passed through a normal sieve having 300 meshes, and, thus, to obtain a negative electrode material sample. The polyvinyl alcohol was heat treated alone at 200°C for 5 hours, and then the temperature is increased to 900°C at the temperature increase rate of 20°C/hour under nitrogen circulation. When the temperature was held for one hour, the carbonization rate was 14%. When a coating carbon ratio was calculated from this value and the carbon coating amount, the coating carbon ratio was 0.11. A lithium ion secondary battery was produced by a similar method to that in the Examples, using the negative electrode material sample of the carbon particles, and similar evaluation was performed. The measured results are shown in Table 1.

(Comparative Examples 4 to 6)

107 g (Comparative Example 4), 1070 g (Comparative Example 5), and 1926 g (Comparative Example 6) of polyvinyl alcohol (polymerization degree: 1700 and completely saponified type) were respectively dissolved in ion-exchanged water prepared by dissolving 1 g of sodium dodecylbenzenesulfonate as a surfactant to prepare mixed solutions having four kinds of concentrations. The obtained respective mixed and 3000 g of the carbon particles prepared in the Examples 1 to 10 were introduced into a dual-arm-type kneading machine having a heating mechanism and mixed at room temperature (25°C) for 1 hour. Subsequently, temperature is increased to 120°C, and water is evaporated and removed, whereby polyvinyl alcohol coating carbon particles were obtained. The obtained polyvinyl alcohol coating carbon particles were heat treated at 200°C for 5 hours in air to infusibilize polyvinyl alcohol, and then the temperature was increased to 900°C at the temperature increase rate of 20°C/hour under nitrogen circulation. The temperature was held for one hour to obtain carbon layer coating carbon particles. The obtained carbon layer coating carbon particles were crushed by a cutter mill to be passed through a normal sieve having 300 meshes, and, thus, to obtain a negative electrode material sample.

(Comparative Example 7)

360 g of coal tar pitch was dissolved in quinoline to prepare a mixed solution. The obtained mixed solution and 3000 g of the carbon particles with an average particle diameter of 15 $\mu$m prepared in the Examples 1 to 10 were introduced into a dual-arm-type kneading machine having a heating mechanism and mixed at room temperature (25°C) for 1 hour. Subsequently, temperature is increased to 270°C, and quinoline is evaporated and removed, whereby coal tar pitch coating carbon particles were obtained. The temperature of the obtained coal tar pitch coating carbon particles was increased to 900°C at the temperature increase rate of 20°C/hour under nitrogen circulation. The temperature was held for one hour to obtain carbon layer coating carbon particles. The obtained carbon coating carbon particles were crushed by a cutter mill to be passed through a normal sieve having 300 meshes, and, thus, to obtain a negative electrode material sample. A lithium ion secondary battery was produced by a similar method to that in the Examples, using the carbon particles and the negative electrode material samples in the respective Comparative Examples, and similar evaluation was performed. The results are shown in Table 1.

(Comparative Example 8)

Hexamine as a curing agent was added to straight novolak resin, and cure treatment was performed while mixing the hexamine and the straight novolak resin on a hot plate heated to 180°C. The cured resin was heat treated for 5 hours in an oven at 200°C, whereby the cure treatment was completed. Subsequently, this resin was cracked with a hammer and then crushed using an impact grinder with classifier. The temperature of the crushed resin was increased to 1000°C at a temperature increase rate of 20°C/hour under a nitrogen atmosphere, and then the crushed resin was held at 1000°C for 1 hour, whereby a carbon powder was obtained.
The carbon powder was subjected to a carbon layer coating treatment by a similar method to that in the carbon particles in the Example 3, and a coarse powder was removed using a 300 mesh sieve to obtain a negative electrode material sample. Further, a lithium ion secondary battery was produced by a similar method to that in the Examples, using the negative electrode material sample, and similar evaluation was performed. The results are shown in Table 1.

(Comparative Example 9)

Spherical natural graphite with an average particle diameter of 15 $\mu$m was filtered through a 300M (mesh) sieve to obtain a carbon powder.
The carbon layer coating treatment was applied to the carbon powder by a similar method to that in the carbon particles in the Example 3, and a coarse powder was removed using a 300 mesh sieve to obtain a negative electrode material sample. Further, a lithium ion secondary battery was produced by a similar method to that in the Examples, using the negative electrode material sample, and similar evaluation was performed. The results are shown in Table 1
[Table 1]

| item | | Coating carbon ratio [X] | TG weight loss rate [z] | BX+10 (B=900) | Plane distance (d002) | R value | Average particle diameter (50% D) | Specific surface area (N2) | Specific surface area (CO2) [Y] | AX+2.5 (A=100) | True density | Electrode density | Charge/ discharge efficiency | Charge/ discharge capacity at 0.2 mA/cm² | Charge/ discharge capacity at 8 mA/cm² | Service life properties |
|---|---|---|---|---|---|---|---|---|---|---|---|---|---|---|---|---|
| Unit | | - | % | | A | - | μm | m²/g | m²/g | | g/cm³ | g/cm³ | % | mAh/cm³ | mAh/cm³ | % |
| Example | 1 | 0.005 | 4.7 | 14.5 | 3.42 | 0.94 | 15.1 | 4.2 | 1.4 | 3.0 | 2.15 | 1.31 | 85 | 295 | 166 | 79.4 |
| | 2 | 0.020 | 15.8 | 28.0 | 3.43 | 0.91 | 15.5 | 1.9 | 1.3 | 4.5 | 2.1 | 1.32 | 86 | 300 | 170 | 80.1 |
| | 3 | 0.050 | 36.2 | 55.0 | 3.45 | 0.91 | 16.5 | 1.5 | 1.0 | 7.5 | 2.13 | 1.32 | 88 | 310 | 180 | 810 0 |
| | 4 | 0.070 | 49.0 | 73.0 | 3.44 | 0.90 | 16.8 | 1.3 | 1.1 | 9.5 | 2.12 | 1.28 | 88 | 303 | 172 | 80.5 |
| | 5 | 0.090 | 62.5 | 91.0 | 3.44 | 0.93 | 17.0 | 1.2 | 1.2 | 11.5 | 2.11 | 1.30 | 87 | 306 | 170 | 80.3 |
| | 6 | 0.005 | 4.0 | 14.5 | 3.42 | 0.89 | 14.6 | 4.0 | 2.1 | 3.0 | 2.16 | 1.32 | 83 | 292 | 172 | 79.2 |
| | 7 | 0.020 | 13.8 | 28.0 | 3.46 | 0.91 | 15.2 | 1.8 | 2.5 | 4.5 | 2.15 | 1.29 | 85 | 298 | 183 | 798 |
| | 8 | 0.050 | 33.5 | 55.0 | 3.43 | 0.95 | 16.1 | 1.6 | 2.3 | 7.5 | 2.14 | 1.32 | 84 | 305 | 185 | 80.3 |
| | 9 | 0.070 | 43.6 | 73.0 | 3.42 | 0.97 | 16.5 | 1.5 | 2.8 | 95 | 2.11 | 1.34 | 87 | 302 | 178 | 80.9 |
| | 10 | 0.090 | 569 | 91.0 | 3.46 | 0.92 | 16.8 | 1.4 | 2.1 | 11.5 | 2.11 | 1.29 | 87 | 309 | 176 | 80.8 |
| Unit | | - | % | | A | - | μm | m²/g | m²/g | | g/cm³ | g/cm³ | % | mAh/cm³ | mAh/cm³ | % |
| | 11 | 0.050 | 39.1 | 55.0 | 3.45 | 0.99 | 4.8 | 5.8 | 1.1 | 7.5 | 2.1 | 1.28 | 81 | 275 | 169 | 77.8 |
| | 12 | 0.050 | 38.1 | 55.0 | 3.45 | 0.93 | 8.5 | 4.5 | 1.3 | 7.5 | 2.13 | 1.30 | 83 | 285 | 189 | 79.0 |
| | 13 | 0.050 | 35.9 | 55.0 | 3.44 | 0.94 | 43.5 | 1.1 | 1.5 | 7.5 | 2.15 | 1.29 | 89 | 312 | 169 | 82.2 |
| | 14 | 0.050 | 36.2 | 55.0 | 3.42 | 0.91 | 62.3 | 0.8 | 2.0 | 7.5 | 2.11 | 1.34 | 88 | 300 | 161 | 80.1 |
| | 1 | 0.000 | 3.4 | 10.0 | 3.45 | 1.00 | 3.2 | 12.1 | 1.5 | 2.5 | 2.12 | 1.01 | 80 | 295 | 170 | 65.1 |
| | 2 | 0.000 | 3.1 | 10.0 | 3.45 | 0.98 | 14.8 | 7.5 | 1.0 | 2.5 | 2.15 | 1.31 | 83 | 288 | 163 | 69.2 |

(continued)

| item | | Coating carbon ratio [X] | TG weight weight, loss rate [z] | BX+10 (B=900) | Plane distance (d002) | R value | Average particle diameter (50% D) | Specific surface area ($N_2$) | Specific surface area ($CO_2$) [Y] | AX+2.5 (A=100) | True density | Electrode density | Charge/ discharge efficiency | Charge/ discharge capacity at 0.2 mA/cm$^2$ | Charge/ discharge capacity at 8 mA/cm$^2$ | Service life properties |
|---|---|---|---|---|---|---|---|---|---|---|---|---|---|---|---|---|
| Comparative Example | 3 | 0.110 | 78.5 | 109.0 | 3.42 | 0.91 | 17.3 | 0.8 | 1.1 | 13.5 | 2.10 | 1.29 | 87 | 284 | 144 | 78.6 |
| | 4 | 0.005 | 3.8 | 14.5 | 3.43 | 0.93 | 15.4 | 4.3 | 3.8 | 3.0 | 2.14 | 1.30 | 84 | 300 | 154 | 76.1 |
| | 5 | 0.050 | 38.1 | 55.0 | 3.46 | 0.96 | 16.8 | 11.3 | 8.5 | 7.5 | 2.12 | 1.32 | 86 | 304 | 152 | 75.2 |
| | 6 | 0.090 | 65.8 | 910 | 3.42 | 0.95 | 17.3 | 16.2 | 14.3 | 11.5 | 2.09 | 1.31 | 87 | 288 | 143 | 79.5 |
| | 7 | 0.050 | 34.1 | 55.0 | 3.45 | 0.99 | 16.5 | 4.8 | 9.8 | 7.5 | 2.1 | 1.29 | 84 | 295 | 157 | 74.6 |
| Unit | | - | % | | A | - | μm | m$^2$/g | m$^2$/g | | g/cm$^3$ | g/cm$^3$ | % | mAh/cm$^3$ | mAh/cm$^3$ | % |
| | 8 | 0.050 | 42.1 | 55.0 | 3 78 | 1.21 | 14.1 | 2.5 | 1.8 | 7.5 | 1.52 | 1.01 | 80 | 333 | 151 | 80.2 |
| | 9 | 0.050 | 11.3 | 55.0 | 3.35 | 0.45 | 15.6 | 1 2 | 1.3 | 7.5 | 2.23 | 1.35 | 92 | 486 | 176 | 63.2 |

As seen from Table 1, the lithium ion secondary batteries in the Example 1 to 14 have excellent input properties while maintaining high charge/discharge capacity and service life properties.

According to above, the lithium ion secondary battery of the present invention can provide a negative electrode material for a lithium ion secondary battery, which enables the production of the lithium ion secondary battery having excellent charge/discharge capacity, service life properties, and input/output properties and an excellent balance between them, and a negative electrode for a lithium ion secondary battery produced using the negative electrode material.

**Claims**

1. A negative electrode material for a lithium ion secondary battery having a carbon layer formed on a surface of a carbon material that serves as a core,
   wherein (A) carbon (002) plane has a plane distance of 3.40 to 3.70 Å as determined by an XRD measurement, (B) content ratio (by mass) of the carbon layer to the carbon material is 0.005 to 0.1, (C) a specific surface area is 0.5 to 10.0 $m^2$/g as determined by a nitrogen measurement at 77 K, and (D) specific surface area Y as determined by carbon dioxide adsorption at 273 K and a content ratio (by mass) X of the carbon layer to the carbon material meet the requirement represented by a formula (I): $0 < Y < AX + 2.5$ [wherein A

2. A negative electrode material for a lithium ion secondary battery having a carbon layer formed on a surface of a carbon material that serves as a core,
   wherein (A) a carbon (002) plane has a plane distance of 3.40 to 3.70 Å as determined by an XRD measurement, (B) a weight loss rate at 100 to 600°C in TG analysis in the passage of dry airflow is 3.5 to 90%, (C) a specific surface area is 0.5 to 10.0 $m^2$/g as determined by a nitrogen adsorption measurement at 77 K, and (D) a weight loss rate Z at 100 to 600°C in TG analysis in the passage of dry airflow and the ratio (by mass) X of the carbon layer to the carbon material meet the requirement represented by a formula (II): $3.5 \leq Z < BX + 10$ [wherein B = 900].

3. The negative electrode material for a lithium ion secondary battery according to claim 1 or 2, wherein in a profile obtained by laser raman spectrometry with an excitation wavelength of 532 nm, when the intensity of the peak appearing near 1360 $cm^{-1}$ is Id, the intensity of the peak appearing near 1580 $cm^{-1}$ is Ig, and the intensity ratio Id/Ig between both the peaks is an R value, the R value is 0.5 to 1.5.

4. The negative electrode material for a lithium ion secondary battery according to any one of claims 1 to 3, wherein an average particle diameter (50% D) is 5 to 50 $\mu$m.

5. The negative electrode material for a lithium ion secondary battery according to any one of claims 1 to 4, wherein a true density is 1.80 to 2.20 g/$cm^3$.

6. A negative electrode for a lithium ion secondary battery being produced using the negative electrode material for a lithium ion secondary battery according to any one of claims 1 to 5.

7. A lithium ion secondary battery being produced using the negative electrode for a lithium ion secondary battery according to claim 6.

<table>
<tr><td colspan="2" align="center">**INTERNATIONAL SEARCH REPORT**</td><td colspan="2">International application No.<br>PCT/JP2011/054020</td></tr>
</table>

**A. CLASSIFICATION OF SUBJECT MATTER**
*H01M4/587*(2010.01)i, *C01B31/02*(2006.01)i

According to International Patent Classification (IPC) or to both national classification and IPC

**B. FIELDS SEARCHED**

Minimum documentation searched (classification system followed by classification symbols)
H01M4/587, C01B31/02

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2008/093724 A1 (Sumitomo Metal Industries, Ltd.),<br>07 August 2008 (07.08.2008),<br>claims 1, 4; paragraphs [0009], [0043] to [0048]<br>& EP 2128086 A1 | 1-7<br>1,5 |
| X<br>Y | JP 2008-305722 A (Tokai Carbon Co., Ltd.),<br>18 December 2008 (18.12.2008),<br>claims 1, 2; paragraph [0029]<br>(Family: none) | 2-7<br>1,5 |
| Y | JP 9-213328 A (Mitsubishi Chemical Corp.),<br>15 August 1997 (15.08.1997),<br>paragraphs [0004], [0011]<br>(Family: none) | 1 |

☒ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>11 May, 2011 (11.05.11) | Date of mailing of the international search report<br>24 May, 2011 (24.05.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/054020 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | WO 2009/022664 A1 (Showa Denko Kabushiki Kaisha), 19 February 2009 (19.02.2009), claim 1; paragraph [0013] & EP 2187468 A1 | 5 |
| A | JP 2009-59676 A (Nippon Carbon Co., Ltd.), 19 March 2009 (19.03.2009), claims; overall of "Detailed Explanation of the Invention" (Family: none) | 1-7 |
| A | JP 2010-9948 A (GS Yuasa Corp.), 14 January 2010 (14.01.2010), claims; overall of "Detailed Explanation of the Invention" (Family: none) | 1-7 |
| A | JP 2008-300274 A (Panasonic Corp., Osaka Gas Co., Ltd.), 11 December 2008 (11.12.2008), claims; overall of "Detailed Explanation of the Invention" & WO 2008/149539 A1 | 1-7 |

Form PCT/ISA/210 (continuation of second sheet) (July 2009)

16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4370662 A
- JP 5307956 A
- JP 2010040228 A
- JP 2010044622 A